# EUROPEAN PATENT APPLICATION

(11) **EP 4 542 741 A1**
(43) Date of publication of application: **23.04.2025**
(21) Application number: 23824071.7
(22) Date of filing: 17.04.2023
(51) Int. Cl.: H01M 50/184, H01M 50/105, H01M 50/211, H01M 10/6554

(54) **BATTERY CELL AND BATTERY MODULE INCLUDING SAME**

(30) Priority: 14.06.2022 KR 20220072135
(71) Applicant: SK On Co., Ltd., Seoul 03161 (KR)
(72) Inventor: CHO, Eun Soo, Daejeon 34124 (KR); KIM, Sung Yeop, Daejeon 34124 (KR); CHEON, Seung Hyeon, Daejeon 34124 (KR)
(74) Representative: Stolmár & Partner Patentanwälte PartG mbB
(86) International application number: PCT/KR2023/005178
(87) International publication number: WO 2023/243845

(57) **Abstract**

According to the present invention, there may be provided a battery cell and a battery module including same, in which a sealing portion sealing a case of the battery cell has formed a folded portion, and a taping structure is introduced only on a portion of the case and the folded portion, so that the deformation of the sealing portion is suppressed and there is no reduction in the cooling effect on the battery cell.

## Description

### [Technical Field]

The present invention relates to a battery cell capable of suppressing deformation of a sealing portion and having improved cooling efficiency, and a battery module including the same.

### [Background Art]

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

Among various secondary batteries, research and development is being conducted most actively on lithium secondary batteries that have high discharge voltage and energy density. These lithium secondary batteries are manufactured by accommodating an electrode assembly including an anode, a cathode, and a separator in a highly flexible pouch-type exterior material, and then heat-welding the edges of the pouch-type exterior material.

However, there was a problem that the heat-welded sealing portion was broken as the internal pressure of the battery cells increased. In order to strengthen the stability of the sealing portion, a method of folding the sealing portion or a method of taping the entire sides of the pouch-type exterior material on which the sealing portion was formed was introduced. However, even when the sealing portion was folded, there was still a problem that the sealing portion was easily broken due to the increase in the internal pressure of the battery cell. In addition, when the entire sides of the pouch-type exterior material was taped, there was a problem that the cooling effect of the battery cell was reduced due to the empty space formed between the pouch-type exterior material and the taping.

Therefore, a method is required to suppress deformation of a sealing portion without reducing the cooling effect of a battery cell.

### [Disclosure]

### [Technical Problem]

The present invention provides a battery cell and a battery module including the same, in which a folding portion is formed in a sealing portion of the battery cell to introduce a structure where only to a part of a case and the folding portion are taped, thereby suppressing deformation of the sealing portion and improving the cooling efficiency of the battery cell.

### [Technical Solution]

A battery cell according to the present invention includes: an electrode assembly; a case body including a first sheet having a cup portion formed therein to accommodate the electrode assembly and a second sheet covering the first sheet; a sealing portion formed by joining the edges of the inner surface of the first sheet and the inner surface of the second sheet; a folding portion formed by folding the sealing portion; and an attachment member adhered to one surface of the folding portion and the outer surface of the second sheet.

According to an embodiment of the present invention, the sealing portion may include: a first sealing portion joined with an electrode tab extended from the electrode assembly and interposed therebetween; and a second sealing portion joined without the electrode tab interposed therebetween, and the folding portion may be formed at the second sealing portion.

According to an embodiment of the present invention, the second sealing portion may further include a joining portion at which the folding portion is not formed.

According to an embodiment of the present invention, the attachment member may not be adhered to the joining portion.

According to an embodiment of the present invention, the folding portion may be tightly attached to the case body by the attachment member.

According to an embodiment of the present invention, the folding portion may be formed by folding the sealing portion at least once toward the center of the case body.

According to an embodiment of the present invention, the folding portion may include a first folding surface facing the outer surface of the second sheet and a second folding surface positioned on the outermost side of the folding portion based on the case body, and the attachment member may be adhered to the second folding surface.

According to an embodiment of the present invention, the attachment member may include an insulating resin.

According to an embodiment of the present invention, the thickness of the attachment member may be 0.01 mm to 2.00 mm.

According to an embodiment of the present invention, the attachment member may be disposed in a multiple number to be spaced apart from each other along the length direction of the second sealing portion.

A battery module according to the present invention includes the battery cell of the present invention as a unit cell.

According to an embodiment of the present invention, the battery module may include a heat dissipation plate.

According to an embodiment of the present invention, the battery module may include a gap filler disposed between the battery cell and the heat dissipation plate.

According to an embodiment of the present invention, the gap filler may be in contact with the attachment member of the battery cell and the outer surface of the first sheet of the battery cell.

### [Advantageous Effects]

The battery cell according to the present invention has a folding portion formed at a sealing portion to stably fix the sealing portion of the battery cell and thus has the effect of suppressing deformation of the sealing portion.

In addition, the battery cell according to the present invention can more stably fix the sealing portion due to an attachment member formed at the folding portion, and thus has the effect of delaying the venting phenomenon in which the seal of the case is released and maintaining the performance of the battery cell for a long period.

In particular, the battery cell according to the present invention forms an attachment member only at a part of the case and the folding portion to introduce a structure where an attachment member is not formed at a cup portion accommodating an electrode assembly, and so an empty space (air pocket) is not formed between the attachment member and the cup portion accommodating the electrode assembly. Accordingly, in a battery module including the battery cell according to the present invention, a gap filler can come into contact with the cup portion accommodating an electrode assembly, thereby improving the cooling efficiency of the battery cell.

### [Description of Drawings]

FIG. 1 schematically illustrates an electrode assembly, a case, and a battery cell in which the electrode assembly is accommodated in the case according to one embodiment of the present invention.
FIG. 2 schematically illustrates a cross-sectional view of a second sealing portion of FIG. 1 taken along line A-A'.
FIG. 3 schematically illustrates a battery cell to which an attachment member is adhered according to one embodiment of the present invention.
FIG. 4 schematically illustrates a cross-sectional view of a battery module including a plurality of battery cells according to one embodiment of the present invention.
FIG. 5 shows a photographic image of an attachment member formed on a folding portion and the outer surface of the upper and lower parts of a sheet, and schematically illustrates an adhesion structure of the attachment member.
FIG. 6 shows a photographic image of an attachment member not formed on a cup portion accommodating an electrode assembly, among the outer surface of a sheet, and schematically illustrates an adhesion structure of the attachment member.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

Hereinafter, a battery cell and a battery module including the same according to the present invention will be described in detail.

A battery cell according to the present invention includes: an electrode assembly; a case body including a first sheet having a cup portion formed therein to accommodate the electrode assembly and a second sheet covering the first sheet; a sealing portion formed by joining the edges of the inner surface of the first sheet and the inner surface of the second sheet; a folding portion formed by folding the sealing portion; and an attachment member adhered to one surface of the folding portion and the outer surface of the second sheet.

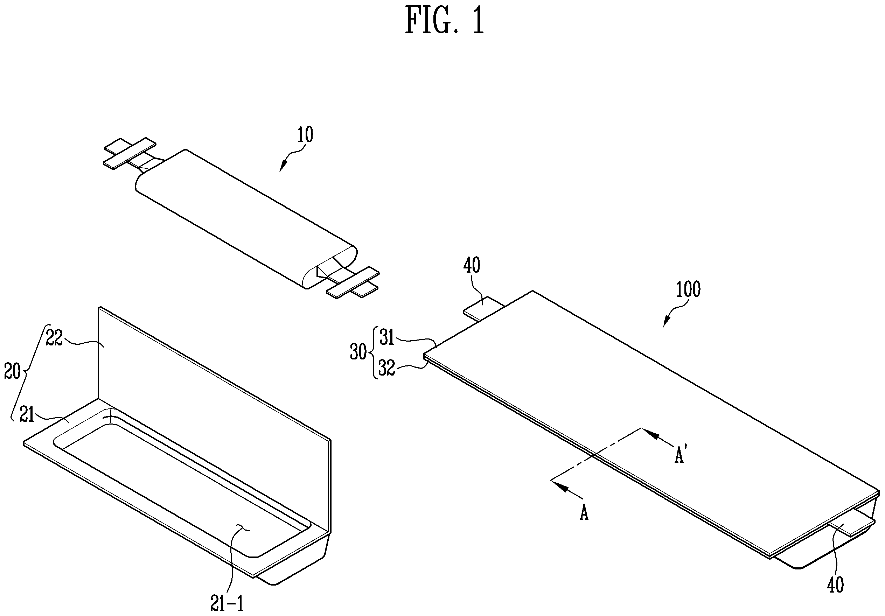

FIG. 1 schematically illustrates an electrode assembly, a case, and a battery cell in which the electrode assembly is accommodated in the case according to one embodiment of the present invention.

Referring to FIG. 1, a battery cell 100 according to an embodiment of the present invention includes an electrode assembly 10. An electrode assembly 10 may include a structure in which a cathode, an anode, and a separator interposed between the cathode and the anode are stacked. A cathode may include a cathode active material which lithium (Li) ions may be inserted to and extracted from, and an anode may include an anode active material which lithium (Li) ions may be absorbed to and extracted from. In addition, a cathode and an anode may further include a binder and a conductive material in each of a cathode active material and an anode active material to improve mechanical stability and electrical conductivity. A separator may be configured to prevent electrical short-circuit between a cathode and an anode and to generate a flow of ions. The type of the separator is not particularly limited, but may include a porous polymer film. An electrode assembly may be manufactured by alternately stacking a plurality of cathodes and anodes and interposing separators between the cathodes and anodes, by a stacking or zigzag stacking method.

The battery cell 100 according to an embodiment of the present invention may further include an electrolyte solution. An electrolyte solution may be a non-aqueous electrolyte solution. An electrolyte solution may include a lithium salt and an organic solvent. For example, the organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

The battery cell 100 according to an embodiment of the present invention includes a case body 20 including a first sheet 21 having a cup portion 21-1 formed therein to accommodate an electrode assembly 10 and a second sheet 22 covering the first sheet 21.

A first sheet 21 and a second sheet 22 serve to protect the electrode assembly 10 from the external environment. A first sheet 21 and a second sheet 22 may include a water-resistant resin, and may be in the form of a film in which, for example, a polyolefin-based resin, a metal, a nylon resin, and a polyterephthalate resin are laminated.

A first sheet 21 includes a cup portion 21-1 formed therein to accommodate an electrode assembly 10. In FIG. 1, a cup portion 21-1 is illustrated as a rectangular shape having rounded edges, but is not limited thereto, and may have various shapes depending on the shape of the electrode assembly 10.

A second sheet 22 has a cover structure that covers a first sheet 21, and in FIG. 1, a second sheet 22 is illustrated as having a flat shape, but is not limited thereto, and may have various shapes depending on the shape of the electrode assembly 10.

A battery cell 100 according to an embodiment of the present invention includes a sealing portion 30 formed by joining the edges of the inner surface of a first sheet 21 and the inner surface of a second sheet 22.

A sealing portion 30 is formed by joining the edges of the inner surface of a first sheet 21 and the inner surface of a second sheet 22 to prevent an electrode assembly 10 accommodated by the first sheet 21 and the second sheet 22 from being released from a case body 20. The structures of a first sheet 21 and a second sheet 22 are not particularly limited, but a polyterephthalate resin having excellent chemical and mechanical properties may be formed on the outer surface of the first sheet 21 and the outer surface of the second sheet 22, and a polyolefin-based resin having excellent insulating properties may be formed on the inner surface of the first sheet 21 and the inner surface of the second sheet 22. The method of forming a sealing portion 30 is not particularly limited, but a sealing portion may be formed by heat-welding the polyolefin-based resin formed on the inner surface of a first sheet 21 and the inner surface of a second sheet 22.

A sealing portion 30 may include: a first sealing portion 31 joined with an electrode tab 40 extended from an electrode assembly 10 and interposed therebetween and a second sealing portion 32 joined without an electrode tab 40 interposed therebetween. When a battery cell is aged or exposed to a high-temperature environment, a gas may be generated, and when a second sealing portion 32 is deformed or vented due to the generated gas, the risk of a battery cell 100 may increase. Therefore, in the battery cell 100 according to the present invention, a folding portion and an attachment member are introduced to a second sealing portion 32 in order to improve the stability of the second sealing portion 32.

An electrode tab 40 may be electrically connected to an electrode assembly. An electrode tab 40 may extend to the outside of a case 20 accommodating an electrode assembly 10 and become an electrode terminal. For example, an electrode tab electrically connected to a plurality of cathodes may become an cathode terminal, and an electrode tab electrically connected to a plurality of anodes may become an anode terminal. In FIG. 1, electrode tabs are illustrated as being formed on different sides, but are not limited thereto, and they may be formed on the same side.

The battery cell according to an embodiment of the present invention includes a folding portion formed by folding a sealing portion.

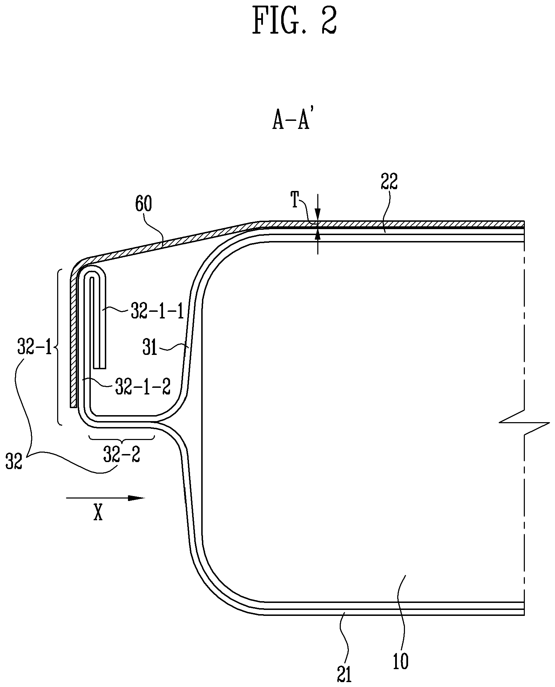

FIG. 2 schematically illustrates a cross-sectional view of a second sealing portion of FIG. 1 taken along line A-A'. Referring to FIG. 2, a folding portion 32-1 may be formed at a second sealing portion 32.

A folding portion 32-1 may stably fix a second sealing portion 32 to suppress deformation of the second sealing portion 32 due to a gas generated inside a case, and delay venting. A folding portion 32-1 may be formed by folding a second sealing portion 32 one or more times in the direction of the center (X) of a case body. For example, a folding portion 32-1 may be formed by folding an end portion of a second sealing portion 32 by 90 degrees, 180 degrees, 270 degrees, or 360 degrees in the direction of the center (X) of a case body.

The battery cell according to an embodiment of the present invention includes an attachment member 60. An attachment member 60 prevents a folding member formed at a sealing member from unfolding due to a gas pressure generated inside a case, thereby delaying a venting phenomenon in which the seal of the case is released and maintaining the performance of the battery cell for a long period.

In particular, the battery cell according to the embodiment of the present invention includes an attachment member 60 adhered to one surface of a folding portion 32-1 and the outer surface of a second sheet 22. More specifically, a folding portion 32-1 includes a first folding surface 32-1-1 facing the outer surface of the second sheet 22 and a second folding surface 32-1-2 positioned on the outermost side of the folding portion 32-1 based on the case body, and the attachment member 60 may be adhered to the second folding surface 32-1-2.

Conventionally, in order to prevent a folding portion from unfolding, an attachment member was formed on the upper and lower surfaces of a sheet accommodating the folding portion and an electrode assembly. However, an empty space (air pocket) was formed between the attachment member and the sheet accommodating the electrode assembly, and a gap filler for cooling a battery cell was separated from a case body due to the empty space, which caused a problem that the cooling efficiency of the battery cell was reduced. In addition, a method of introducing an attachment member between the folding portion and the outer surface of the sheet accommodating the electrode assembly was devised, but there was a problem that the folding portion unfolded when the gas pressure inside the case increased.

In the present invention, an attachment member 60 is adhered to the outermost side of a folding portion 32-1 and is adhered only to one surface of the folding portion 32-1 and the outer surface of a second sheet 22. As a result, the folding portion 32-1 may be prevented from unfolding, an empty space (air pocket) is not formed between the attachment member 60 and a cup portion accommodating an electrode assembly, and in a battery module including a battery cell, since a gap filler may come into contact with the cup portion accommodating the electrode assembly, there is an effect of improving the cooling efficiency of the battery cell.

A second sealing portion 32 may have a folding portion 32-1 formed over the entire area thereof. In addition, a second sealing portion 32 may further include a joining portion 32-2 in which a folding portion 32-1 is not formed. When a second sealing portion 32 includes a joining portion 32-2, an attachment member 60 may not be adhered to the joining portion 32-2. Since a second folding surface 32-1-2 positioned on the outermost side of a folding portion 32-1 is bent with respect to one surface of a joining portion 32-2, when an attachment member 60 is adhered to the folding portion 32-1 and is not adhered to the joining portion 32-2 that is bent with respect to the folding surface 32-1-2, there is an effect of improving the adhesion stability of the attachment member 60.

A folding portion 32-1 may be attached to a case body 20 by an attachment member 60. As a folding portion 32-1 is tightly attached to a case body 20 by an attachment member 60, the overall thickness of a battery cell 100 may be reduced, and there is an effect of increasing the space utilization within a battery module including a plurality of battery cells 100.

An attachment member 60 is not particularly limited as long as it is a material having adhesiveness, but may preferably include an insulating resin. The thickness T of an attachment member may be 0.01 mm to 2.00 mm. When the thickness T of an attachment member is thinner than 0.01 mm, durability may be reduced, which may cause a problem that the attachment member is easily separated from a folding surface, and when the thickness T of the attachment member is thicker than 2.00 mm, there may be a problem that the overall thickness of the battery cell is increased due to the thickness of the attachment member itself. Therefore, as an attachment member 60, an insulating tape having a thickness of 0.01 mm to 2.00 mm that may provide insulation without increasing the overall thickness of a battery cell due to its own thickness may be used.

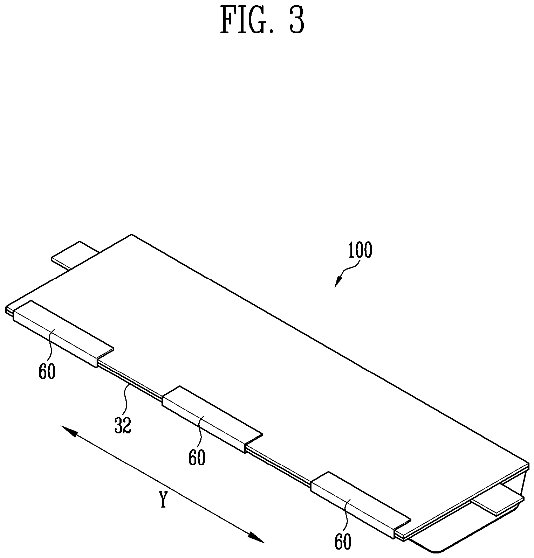

FIG. 3 schematically illustrates a battery cell to which an attachment member is adhered according to one embodiment of the present invention.

Referring to FIG. 3, attachment members 60 may be disposed in a multiple number to be spaced apart from each other along the length direction Y of a second sealing portion 32. Since attachment members 60 are disposed to be spaced apart from each other, even when a shape deformation occurs in which a case swells due to an increase in the gas pressure, the occurrence of spacing between the attachment member 60 and a folding portion 32-1 may be minimized, and so there is an effect of delaying the venting phenomenon in which the sealing of a sealing portion is released.

A battery module according to an embodiment of the present invention includes a battery cell as a unit cell.

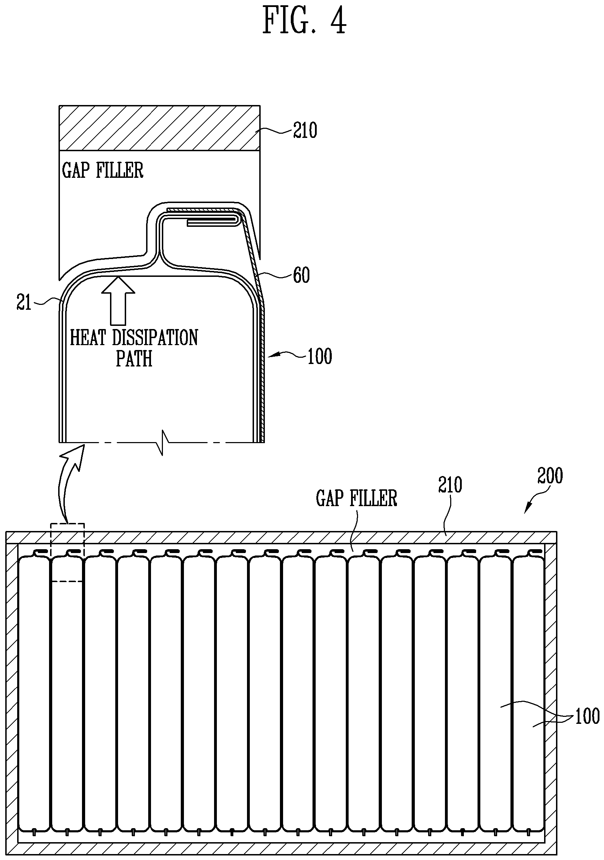

FIG. 4 schematically illustrates a cross-sectional view of a battery module including a plurality of battery cells according to one embodiment of the present invention.

Referring to FIG. 4, a battery module 200 may include a battery cell stack in which a plurality of battery cells 100 are stacked, and a heat dissipation plate 210. In FIG. 4, battery cells 100 are illustrated as being stacked in the horizontal direction to form a battery cell stack, but are not limited thereto, and the battery cells 100 may be stacked in the vertical direction as needed.

A heat dissipation plate 210 may be disposed on the upper part, lower part, lateral part, and the like of a battery cell stack. A heat dissipation plate 210 may be a cooling plate, and a plurality of battery cells 100 may be cooled by a heat dissipation plate 210.

A battery module 200 may include a gap filler disposed between a battery cell 100 and a heat dissipation plate 210. A gap filler may be used to increase contact between a battery cell 100 and a heat dissipation plate 210, and may include a thermally conductive adhesive as needed. A gap filler may be in contact with an attachment member 60 of a battery cell 100 and the outer surface of a first sheet 21 of the battery cell.

In the battery cell according to the present invention, an attachment member is adhered to the outermost side of a folding portion, and is adhered only to one surface of the folding portion and the outer surface of a second sheet, so that no empty space (air pocket) is formed between the attachment member and a cup portion accommodating an electrode assembly. As a result, a gap filler may come into contact with the cup portion accommodating the electrode assembly of the battery cell, and so there is an effect of improving the cooling efficiency of the battery cell by a heat dissipation plate.

### Example

An experiment was performed to confirm the heat dissipation effect according to the shape of an attachment member adhered to a sealing portion of a battery cell. The difference in the thermal resistance (K/W) value in the battery module was confirmed between, as a first attachment member form, a battery cell having an attachment member formed on a folding portion and the outer surface of the upper and lower parts of a sheet, and as a second attachment member form, a battery cell having no attachment member formed on a cup portion accommodating an electrode assembly.

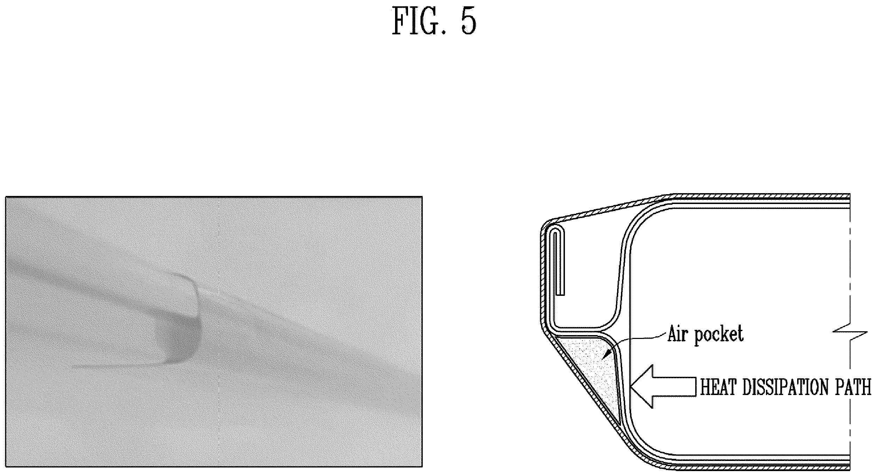

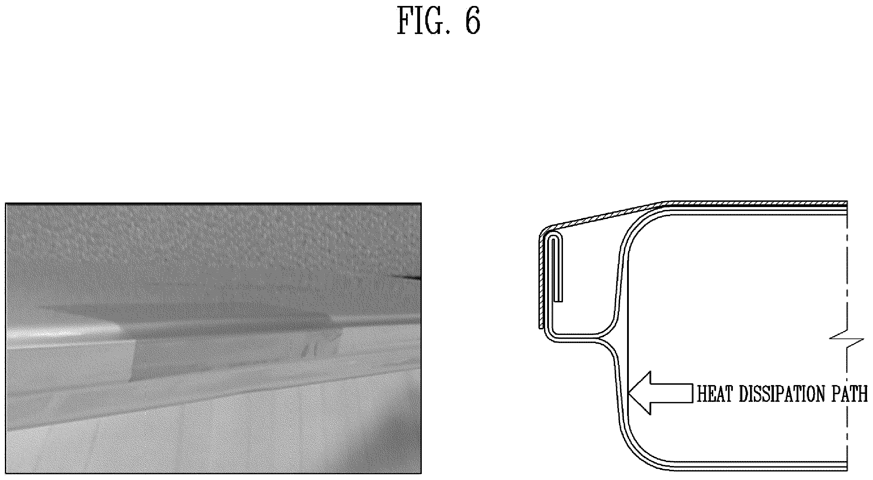

FIG. 5 shows a photographic image of the first attachment member form and schematically illustrates an adhesion structure of the attachment member, and FIG. 6 shows a photographic image of the second attachment member form and schematically illustrates an adhesion structure of the attachment member.

The thermal resistance values were measured under the conditions of an initial flow rate of 5 liter per minute (LPM) of a coolant flowing in from an external heat sink of the battery module, an initial temperature of 15 °C, and a current of 80 A. Table 1 below shows the measurement results of the upper part thermal resistance, lower part thermal resistance, and overall thermal resistance values of the battery module including battery cells of the first attachment member form and the second attachment member form.

**[Table 1]**

| | Overall thermal resistance (K/W) | Lower part thermal resistance (K/W) | Upper part thermal resistance (K/W) |
|---|---|---|---|
| First attachment member form (FIG. 5) | 0.49 | 0.69 | 1.69 |
| Second attachment member form (FIG. 6) | 0.45 | 0.69 | 1.29 |

According to Table 1, it was confirmed that the upper part thermal resistance and the overall thermal resistance values of the battery module including the battery cell of the second attachment member form were lower than the upper part thermal resistance and the overall thermal resistance values of the battery module including the battery cell of the first attachment member form. In other words, it was confirmed that the battery module including the battery cell of the second attachment member form where no empty space (air pocket) was formed between the attachment member and the cup portion accommodating the electrode assembly exhibited improved cooling efficiency compared to the battery cell of the first attachment member form where an empty space (air pocket) was formed between the attachment member and the cup portion accommodating the electrode assembly.

## Claims

1. A battery cell comprising:
an electrode assembly;
a case body including a first sheet having a cup portion formed therein to accommodate the electrode assembly and a second sheet covering the first sheet;
a sealing portion formed by joining the edges of the inner surface of the first sheet and the inner surface of the second sheet;
a folding portion formed by folding the sealing portion; and
an attachment member adhered to one surface of the folding portion and the outer surface of the second sheet.

2. The battery cell according to claim 1, wherein the sealing portion includes: a first sealing portion joined with an electrode tab extended from the electrode assembly and interposed therebetween; and a second sealing portion joined without the electrode tab interposed therebetween, and the folding portion is formed at the second sealing portion.

3. The battery cell according to claim 2, wherein the second sealing portion further includes a joining portion at which the folding portion is not formed.

4. The battery cell according to claim 3, wherein the attachment member is not adhered to the joining portion.

5. The battery cell according to claim 1, wherein the folding portion is tightly attached to the case body by the attachment member.

6. The battery cell according to claim 1, wherein the folding portion is formed by folding the sealing portion at least once toward the center of the case body.

7. The battery cell according to claim 1, wherein the folding portion includes a first folding surface facing the outer surface of the second sheet and a second folding surface positioned on the outermost side of the folding portion based on the case body, and the attachment member is adhered to the second folding surface.

8. The battery cell according to claim 1, wherein the attachment member includes an insulating resin.

9. The battery cell according to claim 1, wherein the thickness of the attachment member is 0.01 mm to 2.00 mm.

10. The battery cell according to claim 2, wherein the attachment member is disposed in a multiple number to be spaced apart from each other along the length direction of the second sealing portion.

11. A battery module comprising the battery cell according to claim 1 as a unit cell.

12. The battery module according to claim 11, wherein the battery module includes a heat dissipation plate.

13. The battery module according to claim 12, wherein the battery module includes a gap filler disposed between the battery cell and the heat dissipation plate.

14. The battery module according to claim 13, wherein the gap filler is in contact with the attachment member of the battery cell and the outer surface of the first sheet of the battery cell.
